# EUROPÄISCHE PATENTSCHRIFT

(11) **EP 1 415 206 B1**
(45) Veröffentlichungstag und Bekanntmachung des Hinweises auf die Patenterteilung: **21.09.2005**
(21) Anmeldenummer: 02767056.1
(22) Anmeldetag: 26.07.2002
(51) Int. Cl.: G05B 19/042

(54) **ERSTELLUNG VON AUFTRÄGEN IN EINEM AUTOMATISIERUNGSSYSTEM**
EXECUTION OF INSTRUCTIONS IN AN AUTOMATION SYSTEM
ETABLISSEMENT D'INSTRUCTIONS DANS UN SYSTEME D'AUTOMATISATION

(30) Priorität: 07.08.2001 DE 10138709
(43) Veröffentlichungstag der Anmeldung: 06.05.2004
(73) Patentinhaber: SIEMENS AKTIENGESELLSCHAFT, 80333 München (DE)
(72) Erfinder: OPATERNY, Thilo, 90453 Nürnberg (DE)
(86) Internationale Anmeldenummer: PCT/DE2002/002763
(87) Internationale Veröffentlichungsnummer: WO 2003/017012

(56) Entgegenhaltungen:
- WO-A-99/01803
- DE-A- 19 744 230
- US-A- 5 644 487
- US-A- 5 752 033
- US-A- 5 877 957

## Beschreibung

Die Erfindung betrifft ein Verfahren und ein System zur Erstellung von Aufträgen in einem Automatisierungssystem, welches insbesondere zur Lösung einer Steuerungsaufgabe oder zur Regelung eines Prozesses dient.

Damit ein Automatisierungssystem von Anwendern an die zu lösende Aufgabe angepasst werden kann, besteht ein modernes Automatisierungssystem zu einem wesentlichen Teil aus Software. Diese Software wird auf einem Programmiergerät erstellt und auf das Automatisierungssystem geladen. Das Programmiergerät wird zum eigentlichen Betrieb des Automatisierungssystem nicht weiter benötigt. Die Programmierung eines Automatisierungssystem unterscheidet sich von der Programmierung in anderen technischen Bereichen. So hat z. B. ein erstes Programm, das den Monatsabschluss einer Buchhaltung durchführt, einen klaren Beginn, ein klares Ende und eine kurze Laufzeit. Es muss nur dafür Sorge getragen werden, dass es einen Monat später wieder aktiv werden kann. Soll hingegen ein zweites Programm eines Automatisierungssystems z. B. einen Aufzug steuern, so bleibt das Programm in Betrieb, solange der Aufzug in Betrieb ist. Die Code-Länge der beiden genannten Programme mag in etwa gleich sein, die Laufzeit und die Randbedingungen unterscheiden sich jedoch wesentlich. Das zweite Programm wird von der Firmware des Automatisierungssystems ständig wiederholt. Bei Automatisierungssystemen spricht man von zyklischer Programmierung. Die Laufzeit des einzelnen Zyklus muss kurz sein, da diese in etwa der Reaktionszeit der Steuerung entspricht. Bei der Inbetriebnahme eines Automatisierungssystem werden Operanden beobachtet und mitunter auch beeinflusst, gesteuert, indem ein Anwender entsprechende Aufträge erstellt, welche vom Automatisierungssystem ausgeführt werden. Man kann damit die Sensoren und Aktoren des Systems testen, noch bevor alle Bausteine des Programms fertig programmiert sind. Im laufenden Betrieb des Programms des Automatisierungssystems sollte dieses Beobachten mit minimalem Eingriff in das laufende Programm vonstatten gehen.

Der Erfindung liegt die Aufgabe zugrunde, die Erstellung von Aufträgen in einem Automatisierungssystem zu vereinfachen.

Diese Aufgabe wird gelöst durch ein Verfahren zur Erstellung von Aufträgen in einem Automatisierungssystem, bei welchem Verfahren
- in Aufträgen Operanden, Steuerwerte und den Operanden zugeordnete Auftragsarten definiert werden, wobei die Aufträge zur Ausführung durch eine Firmware des Automatisierungssystems vorgesehen sind,
- die Aufträge von einem Anwender mittels Eingabemitteln eines Programmiergeräts parametriert werden können und
- das Programmiergerät automatisch jeweils einen Ausführungszeitpunkt und eine Anwendungshäufigkeit der Aufträge in Abhängigkeit von Operand und Auftragsart spezifiziert und den Aufträgen zuordnet.

Diese Aufgabe wird gelöst durch ein System zur Erstellung von Aufträgen in einem Automatisierungssystem, bei welchem System
- Aufträge vorgesehen sind, welche durch Operanden, Steuerwerte und den Operanden zugeordnete Auftragsarten definiert sind,
- eine Firmware des Automatisierungssystems zur Ausführung der Aufträge vorgesehen ist,
- Eingabemittel eines Programmiergeräts zur Parametrierung der Aufträge durch einen Anwender vorgesehen sind und
- das Programmiergerät zur automatischen Spezifizierung eines Ausführungszeitpunkts und einer Anwendungshäufigkeit der Aufträge in Abhängigkeit von Operand und Auftragsart und zur Zuordnung des Ausführungszeitpunkts und der Anwendungshäufigkeit zu den Aufträgen vorgesehen ist.

Die Entscheidung, wann und wie oft ein anwenderinitiierter Auftrag zum Beobachten oder zum Steuern innerhalb eines Automatisierungssystems ausgeführt werden soll, muss in bereits bekannten Systemen vom Anwender selbst getroffen werden. Das erfindungsgemäße System trifft diese Entscheidung automatisch, indem es die entsprechenden Triggereinstellungen in Abhängigkeit von Operand und Auftragsart spezifiziert und dem jeweiligen Auftrag zuordnet. Gemäß der Erfindung wird der Auftrag dann durch das Programmiergerät an das Automatisierungssystem weitergeleitet und dort zu den spezifizierten Ausführungszeitpunkten im Verlauf der zyklischen Programmausführung ausgeführt, so dass das Programm weder abgebrochen werden muss noch durch die Ausführung des Auftrags im Ablauf gestört wird.

In einer vorteilhaften Ausgestaltung des erfindungsgemäßen Systems weist das Programm einen oder mehrere Organisationsbausteine und weitere Systembausteine auf. Die Organisationsbausteine werden durch die Firmware des Automatisierungssystems nach bestimmten Regeln zur Ausführung gebracht. Diese Regeln sind beeinflussbar, um das Automatisierungssystem an die Aufgabe anzupassen. Die Organisationsbausteine dienen der Ausführung von Operationen, die Operanden miteinander verknüpfen. Vorteilhafterweise gibt es Organisationsbausteine, die in festen, parametrierbaren Zeitintervallen zur Ausführung gebracht werden. Ein Organisationsbaustein kann andere Bausteine aufrufen. Die Bausteine, die von dem Organisationsbaustein direkt oder indirekt aufgerufen werden bilden eine Ablaufebene. Es gibt einen Organisationsbaustein, der beim Start des Automatisierungssystems ausgeführt wird. Außerdem gibt es einen Organisationsbaustein, der immer dann gestartet wird, wenn kein intervallgesteuerter Organisationsbaustein ausgeführt wird. Dieser im freien Zyklus laufende Organisationsbaustein wird zur Realisierung der Aufgabe verwendet. Er wird am häufigsten ausgeführt und damit kann das Automatisierungssystem am schnellsten reagieren, falls das System keine hardware-ereignisgesteuerten Organisationsbausteine kennt.

Die verschiedenen Ablaufebenen sind durch die Firmware priorisiert. Die höherprioren Ebenen unterbrechen die niederprioren Ebenen. Sind alle Bausteine der höheren Ebene ausgeführt, werden die der niedrigeren Ebene weiter ausgeführt.

Ein erster Systembaustein bildet eine Peripherie auf Eingangswerte in einem Speicher und ein zweiter Systembaustein bildet Ausgangswerte aus dem Speicher auf die Peripherie ab. Von Sensoren erfasste Werte werden so im Speicher des Automatisierungssystem abgelegt, damit das Programm darauf zugreifen kann. Die vom Programm gewünschten Ausgaben müssen aus dem Speicher wieder an die Aktoren weitergeben werden. Dazu wird der Speicher in mehrere Bereiche aufgeteilt, die in den Programmiersprachen abgebildet sind: Eingänge, Ausgänge, Merker, Timer, Zähler, etc. Die verschiedenen Bereiche sind dabei nach ihren Aufgaben benannt. Da es sich dabei im Prinzip um Speicher handelt, ist es durchaus möglich auf einen Eingang zu schreiben oder einen Ausgang zu lesen.

In einer weiteren vorteilhaften Ausgestaltung der Erfindung spezifiziert das Programmiergerät automatisch jeweils einen Ausführungszeitpunkt und eine Anwendungshäufigkeit der Aufträge, indem Operanden und Auftragsarten, welche in festgelegten Speicherbereichen des Speichers gespeichert sind aufgrund von Regeln verknüpft werden. Solche Speicherbereiche bilden beispielsweise Felder einer Tabelle ab, welche mittels der Eingabemittel zur Eingabe der Operanden, der Steuerwerte und der Auftragsarten durch den Anwender vorgesehen sind.

Nachfolgend wird die Erfindung anhand der in den Figuren dargestellten Ausführungsbeispiele näher beschrieben und erläutert.

Es zeigen:
- FIG 1: ein mögliches Einsatzszenario der Erfindung,
- FIG 2: eine schematische Darstellung eines Auftrags und
- FIG 3: den prinzipiellen Ablauf eines Programms eines Automatisierungssystems,

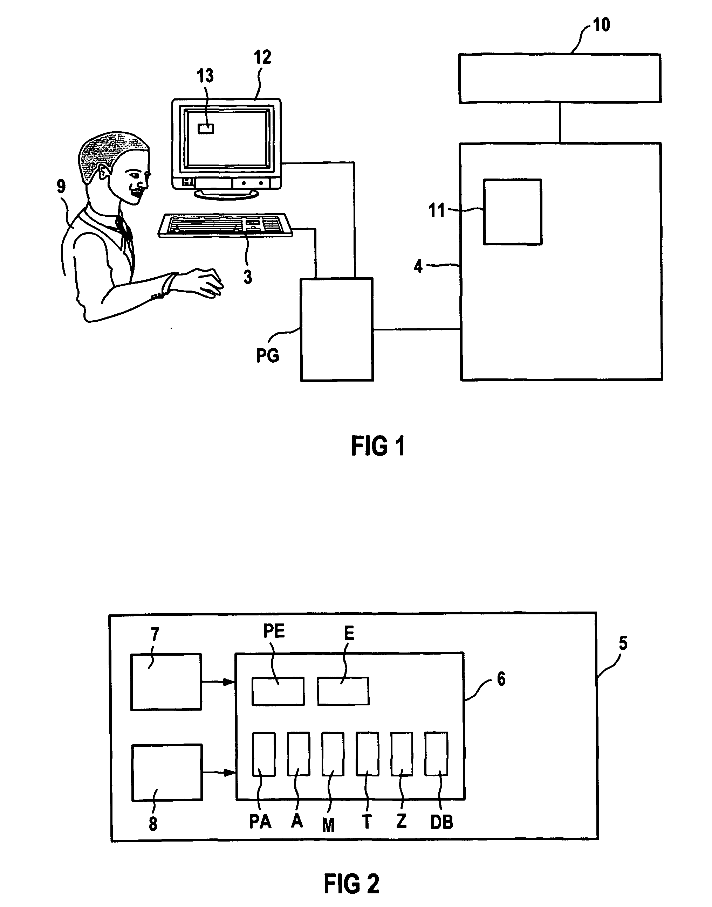

FIG 1 zeigt ein Automatisierungssystem 4 mit einem Speicher 11 und einer Peripherie 10. Das Automatisierungssystem 4 ist mit einem Programmiergerät PG verbunden. Das Programmiergerät PG weist Verbindungen zu Eingabemitteln 3 und zu Anzeigemitteln 12 auf. Auf den Anzeigemitteln 12 werden beobachtete Werte 13 dargestellt. Das System wird von einem Anwender 9 benutzt.

In FIG 2 ist der schematische Aufbau eines Auftrags 5 dargestellt. Im Auftrag 5 werden Operanden 6 eine Auftragsart 8 (Steuern, Beobachten) und gegebenenfalls Steuerwerte 7 zugeordnet. Die Operanden 6 sind als im Speicher 11 abgebildete Eingangswerte E, direkt über einen Rückwandbus von der Peripherie 10 des Automatisierungssystems 4 erhaltene Eingangswerte PE, im Speicher 11 abgebildete Ausgangswerte A, direkt über den Rückwandbus an die Peripherie 10 gehende Ausgangswerte PA, Merker M, Timer T, Zähler Z und/oder als im Speicher 11 gespeicherte Datenbausteine DB ausgebildet.

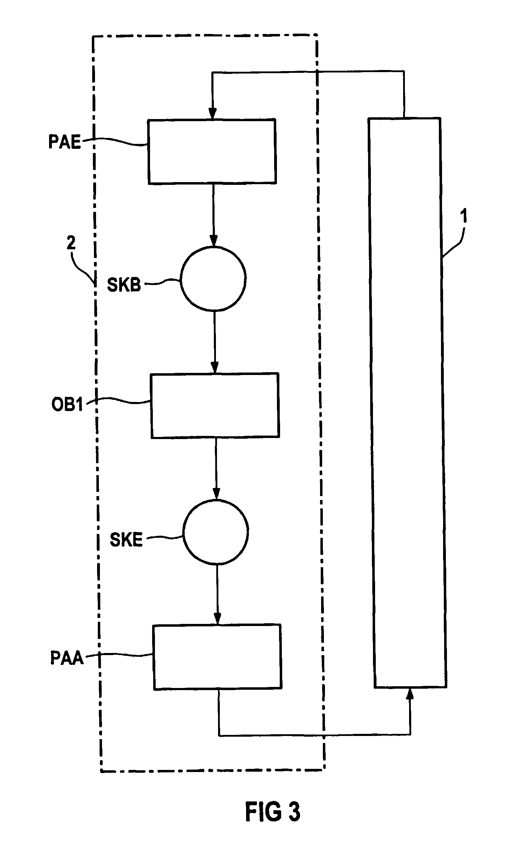

FIG 3 zeigt eine Firmware 1 des Automatisierungssystems 4, welche ein Programm 2 ausführt. Das Programm 2 enthält einen ersten Systembaustein PAE, einen ersten Ausführungszeitpunkt SKB, einen Organisationsbaustein OB1, einen zweiten Ausführungszeitpunkt SKE und einen zweiten Systembaustein PAA. Die Ausführungszeitpunkte SKB, SKE werden auch als Systemkontrollpunkte bezeichnet.

Im im Folgenden anhand FIG 1 bis FIG 3 erläuterten Ausführungsbeispiel enthält der Organisationsbaustein OB1 das Anwendungsprogramm. Der Anwender 9 programmiert die Lösung einer Steuerungsaufgabe in Programmiersprachen, die der Aufgabe angepasst sind. Je nach Sprache spiegelt sich dies in unterschiedlichen Sprachkonstrukten wieder. Im Ausführungsbeispiel besteht ein Programm 2 aus Bausteinen, die Bausteine bestehen aus Netzwerken. Die Netzwerke bestehen aus Operationen, die Operanden 6 miteinander verknüpfen. Solch ein Netzwerk stellt eine logische Verknüpfung dar. Es entspricht einer Zuweisung, z. B. einem Statement in den Programmiersprachen C oder Pascal. Ein Baustein entspricht einer Prozedur oder Funktion in C oder Pascal. Bausteine können sich gegenseitig aufrufen. Unter besonderen Umständen kann es auch sein, dass das Automatisierungssystem 4 keinen Baustein des Programms 2 ausführt. Dieser spezielle Betriebszustand (genannt STOP) tritt z. B. in Fehlerfällen auf, z. B. beim Defekt einer Peripherie 10, er kann aber auch bei der Inbetriebnahme des Automatisierungssystems 4 notwendig sein und durch das Programmiergerät PG angefordert werden. Bei der Inbetriebnahme eines Automatisierungssystems 4 möchte der Anwender 9 Operanden 6 beobachten und mitunter auch beeinflussen, d. h. steuern. Er kann damit die Sensoren und Aktoren selbst testen, noch bevor alle Bausteine fertig programmiert sind. Im laufenden Betrieb eines Automatisierungssystems 4 sollte dieses Beobachten, im Gegensatz z. B. zum Beobachten von Operanden 6 bei Buchhaltungssystemen, mit minimalen Eingriffen in das laufende Programm 2 vonstatten gehen. Dazu schickt das Programmiergerät PG spezielle Aufträge 5 an das Automatisierungssystem 4, die von der Firmware 1 ausgeführt werden, ohne dass der zyklische Betrieb unterbrochen wird. Mit Hilfe dieser Aufträge 5 kann man nun z. B. Ausgänge PA, A beobachten, die nicht an Aktoren angeschlossen sind, bzw. dieses tun bevor man die Aktoren anschließt, oder Eingangswerte simulieren, die nicht durch die Sensoren geliefert werden.

Das Automatisierungssystem 4 legt Eingangswerte PE, E in einem Speicher 11 ab und gibt Ausgangswerte PA, A aus dem Speicher 11 wieder an die Aktoren aus. Zum Abbilden der Peripherie 10 auf Eingangswerte PE ist im Automatisierungssystem 4 ein erster Systembaustein PAE vorhanden. Des Weiteren ist ein zweiter Systembaustein PAA zum Abbilden der Ausgänge PA auf die Peripherie 10 vorhanden. Der erste Systembaustein PAE wird vor dem Organisationsbaustein OB1 zur Ausführung gebracht, der zweite Systembaustein PAA nachdem der Organisationsbaustein OB1 ausgeführt wurde. Das Automatisierungssystem 4 liest somit mit dem ersten Systembaustein PAE die Werte von Sensoren und Bedienelementen ein und verarbeitet diese im Organisationsbaustein OB1 mit internen Zuständen zu Ausgabewerten für Aktoren. Die Ausgabewerte PA, A werden im zweiten Systembaustein PAA an die Aktoren gegeben. Die speziellen Aufträge 5 zum Beobachten und Steuern sollten nun zwischen der Ausführung des Organisationsbausteins OB1 und der Peripherieabbildung ausgeführt werden, damit sie auch wirksam werden können. In FIG 3, welche den zyklischen Ablauf der genannten Bausteine zeigt, sind diese beiden Zeitpunkte als erster Ausführungszeitpunkt SKB und als zweiter Ausführungszeitpunkt SKE dargestellt. Bei der Erstellung einen Auftrages 5 zum Beobachten oder Steuern von Operanden 6 wird der jeweils geeignete Ausführungszeitpunkt SKB, SKE vom Anwender 9 angegeben oder automatisch bestimmt. Das Automatisierungssystem 4 nimmt den Auftrag 5 an, und führt ihn aus, wenn das Programm 2 an die entsprechende Stelle des Ausführungszeitpunktes SKB, SKE gelangt. Danach fährt das Automatisierungssystem 4 mit der normalen Programmausführung fort. Dadurch stellt der Auftrag 5 zwar einen Eingriff in das laufende System dar, beeinflusst die Zykluszeit aber nur minimal. Neben der Ausführung der Aufträge 5 zu den beiden genannten Ausführungszeitpunkten SKB, SKE ist aber auch eine Ausführung an anderen Punkten im Programmablauf denkbar, z. B. bei Betriebszustandsübergängen, an Codeadressen oder auch eine Ausführung unabhängig von irgendwelchen Programmstellen.

Der zyklische Betrieb des Programms 2 eines Automatisierungssystems 4 wirft eine weitere Frage auf: Wie oft soll der Auftrag 5 ausgeführt werden? Nachdem der Auftrag 5 ausgeführt wurde ist denkbar, dass der Auftrag 5 auf dem Automatisierungssystem 4 gelöscht wird, dass er blockiert wird oder dass er bei nächster Gelegenheit wieder ausgeführt wird. Welche Strategie zu bevorzugen ist hängt natürlich vom Auftrag 5, der Aufgabe des Automatisierungssystems 4, also der erlaubten Zykluszeitverlängerung, und den Fähigkeiten der Kommunikationsverbindung zum Auftraggeber, dem Programmiergerät PG, ab. Die Spezifizierung des Ausführungszeitpunktes SKB, SKE und der Ausführungshäufigkeit wird Trigger genannt. Der Trigger sollte zur Aufgabe passen.

Erstes Beispiel: Will man Eingänge PE, E steuern, so ist es am sinnvollsten, dies zum ersten Ausführungszeitpunkt SKB zu tun, nachdem sie durch den ersten Systembaustein PAE gebildet wurden und bevor sie im Programm 2 verwendet werden. Dieser Auftrag 5 sollte in jedem Zyklus durchgeführt werden, solange, bis der Anwender 9 den Auftrag 5 nicht mehr benötigt.

Zweites Beispiel: Will man Ausgänge PA, A steuern um ein Programm 2 zu übersteuern, das nicht so wirkt wie es soll, so geschieht dies sinnvollerweise am zweiten Ausführungszeitpunkt SKE. Andernfalls kann das Programm 2 die Speicherstelle des Ausgangs PA, A jederzeit wieder überschreiben. Dieser Auftrag 5 sollte in jedem Zyklus durchgeführt werden, solange, bis der Anwender 9 den Auftrag 5 nicht mehr benötigt.

Drittes Beispiel: Will man beobachten, so ist es nicht sinnvoll, dies in jedem Zyklus zu tun, da die Kommunikationsmöglichkeiten mit dem Programmiergerät PG eingeschränkt sind. Liefert das Automatisierungssystem 4 mehr Daten, als man übertragen und/oder verarbeiten kann, muss man eine Flusskontrolle spezifizieren. Wurde der Trigger erreicht, ist der Auftrag 5 solange auf dem Automatisierungssystem 4 blockiert, bis das Programmiergerät PG die beobachteten Werte 13 auf den Anzeigemitteln 12 dargestellt hat und den Auftrag 5 wieder freigibt.

Viertes Beispiel: Will man beobachten oder steuern wenn das Automatisierungssystem 4 im Betriebszustand STOP ist, kann man die Ausführungszeitpunkte SKB, SKE nicht verwenden, denn sie werden nicht erreicht. In diesem Falle ist eine von der Programmausführung unabhängige einmalige Ausführung sinnvoll ("Trigger: Sofort"). Damit lassen sich Merker M initialisieren und/oder die Peripherie 10 testen.

Fünftes Beispiel: Das Automatisierungssystem 4 realisiert einen Zustandsautomaten. Der Zustand wird in einem Merker M, d. h. in einem Teil des Speichers 11, gespeichert. Zu Testzwecken möchte man nun den Automaten in einen bestimmten Zustand versetzten, ohne die Reaktionen des Automaten auf die Eingänge PE, E zu beeinflussen. In diesem Fall ist es ausreichend den Steuer-Auftrag für den Merker M nur ein einziges Mal am ersten Ausführungszeitpunkt SKB auszuführen. Sobald der Trigger erreicht ist, darf der Auftrag 5 gelöscht werden.

Wie man anhand der Beispiele sieht, ist es für einen Anwender 9 schwierig zu bestimmen, wie der Trigger eines Auftrag 5 zu setzen ist. Sie zeigen, dass die Trigger in Abhängigkeit von Operand 6 und Auftragsart 8 gewählt werden sollten. In einem Auftrag 5 werden die zu beobachtenden Operanden 6 oder die zu steuernden Operanden 6 und deren Steuerwerte 7 zusammengefasst. Die Zahl der Operanden 6 in einem Auftrag 5 und die Zahl der Aufträge 5 für ein Automatisierungssystem ist natürlich äbhängig vom Automatisierungssystem 4 und vom Programmiergerät PG und deren Kommunikationsfähigkeiten. In jedem Fall unterliegen diese Einschränkungen. Gegen diese Einschränkungen kann man im Allgemeinen nichts machen. Es gilt die gegebenen Möglichkeiten so gut wie möglich zu nutzen. Dazu dienen die verschiedenen Trigger. Für jede Möglichkeit gibt es eine sinnvolle Anwendung. Für einen ungeübten Anwender 9 ist nicht leicht zu erkennen welchen Trigger er in welchem Falle nehmen soll. Werden mehrere Aufträge 5 auf einen Trigger gelegt, so ist nicht sichergestellt in welcher Reihenfolge diese ausgeführt werden. Das Automatisierungssystem 4 könnte die Operanden 6 der auf einem Triggerpunkt liegenden Aufträge 5 zu einem Auftrag 5 zusammenfassen, was zu einem erheblichen Aufwand im Automatisierungssystem 4 führt. Dabei könnten Überschneidungen bei den Steuerwerten 7 auftreten, die mit speziellen Regeln abgearbeitet werden müssten.

Das hier vorgeschlagene Verfahren und System wählt automatisch den jeweils geeigneten Trigger. Die Applikation im Ausführungsbeispiel erhält zwei "Gesichter". Dem einfachen Anwender 9 wird keine Möglichkeit mehr gegeben die genauen Triggerbedingungen einzustellen, diese werden durch das Programmiergerät PG vorgegeben. Der Anwender 9 kann die Operanden 6 und die Steuerwerte 7 eingeben, kann die Aufträge 5 stoppen und starten. Dem erfahrenen Anwender 9 werden alle vorhandenen Möglichkeiten zur Verfügung gestellt, zusätzlich kann er das für den einfachen Anwender 9 durchgeführte Verfahren anwählen, z. B. als "Trigger: Automatisch". Der Anwender 9 füllt eine Tabelle mit mindestens fünf Spalten teilweise aus. Eine solche Tabelle ist im Folgenden beispielhaft angegeben:

| Operand | Beobachten? | beobachteter Wert | Steuern? | Steuerwert |
|---|---|---|---|---|
| e1.0 | ja | true | ja | true |
| a4.3 | ja | false | ja | false |
| mw6 | ja | 22 | nein | |
| eb4 | nein | | nein | |
| aw4 | ja | 88 | nein | |

Im Beispiel enthält die erste Spalte den Operanden 6. Die zweite Spalte gibt an, ob der Operand 6 beobachtet werden soll. Die dritte Spalte enthält dann den beobachteten Wert 13, diese Spalte füllt der Anwender 9 natürlich nicht aus. Die vierte Spalte gibt an, ob der Operand 6 gesteuert werden soll und die fünfte Spalte zeigt schließlich den jeweils zugehörigen Steuerwert 7. Nachfolgend wird beschrieben, wie aus dieser Tabelle Aufträge 5 für das Automatisierungssystem 4 gemacht werden. Wie im oben genannten zweiten Beispiel beschrieben ist es sinnvoll Ausgänge PA, A am zweiten Ausführungszeitpunkt SKE zu steuern. Dadurch wird erreicht, dass die Steuerwerte 7 auch tatsächlich auf die Peripherie 10 gelegt werden. Es ist jedoch nicht sinnvoll Eingänge PE, E am zweiten Ausführungszeitpunkt SKE zu steuern, da diese Werte sofort durch den ersten Systembaustein PAE überschrieben würden. Aus der Beispiel-Tabelle werden zwei Steueraufträge erzeugt. Der erste Auftrag enthält alle Eingänge PE, E und bekommt den ersten Ausführungszeitpunkt SKB zugewiesen. Der zweite Auftrag enthält alle anderen Operanden 6 und bekommt den zweiten Ausführungszeitpunkt SKE zugewiesen. Beide Aufträge werden in jedem Zyklus des Programms 2 durchgeführt. Sollte einer der beiden Aufträge leer sein, z. B. weil die Tabelle in der ersten Spalte keinen Eingang PE, E enthält, so wird dieser Auftrag nicht im Automatisierungssystem 4 installiert. Da die Ausgänge PA, A am zweiten Ausführungszeitpunkt SKE gesteuert werden, ist es sinnvoll sie am ersten Ausführungszeitpunkt SKB zu beobachten. Dadurch ist sichergestellt, dass die gesteuerten Werte auch wieder sichtbar sind. Andernfalls müsste im Automatisierungssystem 4 für die Bearbeitung der Aufträge 5 eine Reihenfolge angegeben werden können. Diese Zusatzbelastung für das Automatisierungssystem 4 wird damit vermieden. Aus diesem Grund ist es auch sinnvoll die Eingänge PE, E am zweiten Ausführungszeitpunkt SKE zu beobachten. Aus der Beispiel-Tabelle werden des Weiteren zwei Beobachtungsaufträge erzeugt: Ein dritter Auftrag enthält alle Eingänge PE, E und bekommt den zweiten Ausführungszeitpunkt SKE zugewiesen. Ein vierter Auftrag enthält alle anderen Operanden 6 und bekommt den ersten Ausführungszeitpunkt SKB zugewiesen. Die beiden letztgenannten Aufträge werden nach jedem Trigger blockiert, bis sie gemeinsam durch das Programmiergerät PG wieder freigegeben werden. Dies gilt solange bis das Automatisierungssystem 4 in den Betriebszustand STOP geht. In diesem Fall werden die Ausführungszeitpunkte SKB, SKE nicht mehr erreicht, was dazu führt, dass keine neuen Werte mehr angezeigt werden. Nun wird selbstständig durch das Programmiergerät PG in festen Zeitintervallen ein Beobachtungsauftrag ohne speziellen Ausführungszeitpunkt, der alle zu beobachtenden Operanden 6 enthält, an das Automatisierungssystem 4 geschickt. Dies stellt keine Belastung für das Automatisierungssystem 4 dar, da es im Betriebszustand STOP keinen Zyklus ausführt. Die Steueraufträge werden durch den Betriebszustand STOP nicht beeinflusst. Will der Anwender 9 im Betriebszustand STOP steuern, so muss er in den Modus für erfahrene Anwender wechseln. Dort kann er weiterhin mittels "Trigger: Automatisch" die Operanden 6 beobachten und für die zu steuernden Operanden 6 den "Trigger: Sofort" verwenden.

Die Tabelle des Ausführungsbeispiels wird also auf bis zu vier verschiedene Aufträge 5 aufgeteilt: Im dritten Auftrag werden im Speicher 11 abgebildete Eingangswerte E und direkt über einen Rückwandbus von der Peripherie 10 des Automatisierungssystems 4 erhaltene Eingangswerte PE zum zweiten Ausführungszeitpunkt SKE beobachtet, im ersten Auftrag werden die genannten Eingangswerte PE, E zum ersten Ausführungszeitpunkt SKB gesteuert, d. h. ihnen werden Steuerwerte 7 zugewiesen. Im vierten Auftrag werden Operanden 6 zum ersten Ausführungszeitpunkt SKB beobachtet. Diese Operanden 6 sind z. B. im Speicher 11 abgebildete Ausgangswerte A, direkt über den Rückwandbus an die Peripherie 10 gehende Ausgangswerte PA, Merker M, Timer T, Zähler Z und im Speicher 11 gespeicherte Datenbausteine DB. Die gleichen Operanden 6, mit Ausnahme der Timer T, können im zweiten Auftrag zum zweiten Ausführungszeitpunkt SKE gesteuert werden. Leere Aufträge werden nicht installiert. Unter einem leeren Auftrag versteht man dabei einen Auftrag, dem die nötigen Angaben zu Operanden 6, Auftragsart 8 und/oder Steuerwert 7 fehlen. Im Betriebszustand STOP werden alle Operanden 6 in einem Auftrag 5 mit "Trigger: Sofort" in einem festen Zeitintervall beobachtet.

Das vorgeschlagene System und Verfahren ermöglicht somit die erleichterte Angabe von Triggerbedingungen für das Beobachten und Steuern von Operanden 6. Der Anwender 9 wird dadurch von Dingen entlastet, die ihn in vielen Fällen nicht interessieren. Dazu wird ein Regelwerk gebildet, das sinnvolle Entscheidungen zur Auswahl der Triggerbedingungen trifft. Das Regelwerk generiert die Entscheidungen automatisch aus Eingaben eines Anwenders 9, die dieser z. B. in Form von Tabelleneingaben an das System gibt.

Zusammenfassend betrifft die Erfindung somit ein Verfahren und ein System zur Erstellung von Aufträgen 5 in einem Automatisierungssystem 4, welches insbesondere zur Lösung einer Steuerungsaufgabe oder zur Regelung eines Prozesses dient. Die Erstellung der Aufträge 5 wird vereinfacht, indem in Aufträgen 5 Operanden 6, Steuerwerte 7 und den Operanden 6 zugeordnete Auftragsarten 8 definiert werden, wobei die Aufträge 5 zur Ausführung durch eine Firmware 1 des Automatisierungssystems 4 vorgesehen sind, die Aufträge 5 von einem Anwender 9 mittels Eingabemitteln 3 eines Programmiergeräts PG parametriert werden können und das Programmiergerät PG automatisch jeweils einen Ausführungszeitpunkt SKB, SKE und eine Anwendungshäufigkeit der Aufträge 5 in Abhängigkeit von Operand 6 und Auftragsart 8 spezifiziert und den Aufträgen 5 zuordnet.

## Patentansprüche

1. Verfahren zur Erstellung von Aufträgen in einem Automatisierungssystem, bei welchem Verfahren
- in Aufträgen (5) Operanden (6), Steuerwerte (7) und den Operanden (6) zugeordnete Auftragsarten (8) definiert werden, wobei die Aufträge (5) zur Ausführung durch eine Firmware (1) des Automatisierungssystems (4) vorgesehen sind,
- die Aufträge (5) von einem Anwender (9) mittels Eingabemitteln (3) eines Programmiergeräts (PG) parametriert werden können und
- das Programmiergerät (PG) automatisch jeweils einen Ausführungszeitpunkt (SKB, SKE) und eine Anwendungshäufigkeit der Aufträge (5) in Abhängigkeit von Operand (6) und Auftragsart (8) spezifiziert und den Aufträgen (5) zuordnet.

2. Verfahren nach Anspruch 1,
**dadurch gekennzeichnet,**
**dass** das Verfahren zur Ausführung der Aufträge (5) vorgesehen ist, wobei
- ein Programm (2) von der Firmware (1) des Automatisierungssystems (4) zyklisch wiederholt ausgeführt wird,
- das Programmiergerät (PG) die Aufträge (5) an das Automatisierungssystem (4) weiterleitet und
- die Aufträge (5) von der Firmware (1) ausgeführt werden, sobald das Programm (2) an den dem jeweiligen Auftrag (5) zugeordneten Ausführungszeitpunkt (SKB, SKE) gelangt, wobei die zyklische Ausführung des Programms (2) nicht beendet wird.

3. Verfahren nach Anspruch 2,
**dadurch gekennzeichnet,**
**dass** das Programm (2) mindestens einen Organisationsbaustein (OB1) und Systembausteine (PAE, PAA) enthält, wobei der Organisationsbaustein (OB1) zur Ausführung von Operationen, die Operanden (6) miteinander verknüpfen, vorgesehen ist, wobei ein erster Systembaustein (PAE) zum Abbilden einer Peripherie (10) auf Eingangswerte (PE) in einem Speicher (11) und ein zweiter Systembaustein (PAA) zum Abbilden von Ausgangswerten (PA) aus dem Speicher (11) auf die Peripherie (10) vorgesehen ist.

4. Verfahren nach einem der vorhergehenden Ansprüche,
**dadurch gekennzeichnet,**
**dass** die Operanden (6) als Eingangswerte (PE, E) und Ausgangswerte (PA, A) ausgebildet sind, wobei das Programm (2) auf die Eingangswerte (PE, E) zugreift und durch Verknüpfung der Eingangswerte (PE, E) die Ausgangswerte (PA, A) erzeugt.

5. Verfahren nach einem der vorhergehenden Ansprüche,
**dadurch gekennzeichnet,**
**dass** ein erster Ausführungszeitpunkt (SKB) der Aufträge (5) zwischen der Ausführung des ersten Systembausteins (PAE) und der Ausführung des Organisationsbausteins (OB1) liegt und dass ein zweiter Ausführungszeitpunkt (SKE) der Aufträge (5) zwischen der Ausführung des Organisationsbausteins (OB1) und der Ausführung des zweiten Systembausteins (PAA) liegt.

6. Verfahren nach Anspruch 5,
**dadurch gekennzeichnet,**
**dass** eine erste Auftragsart ein Beobachten von Operanden (6) beinhaltet, wobei beobachtete Werte (13) der Operanden (6) dem Anwender (9) mittels Anzeigemitteln (12) des Programmiergeräts (PG) angezeigt werden, wobei Eingangswerte (PE, E) zum zweiten Ausführungszeitpunkt (SKE) beobachtet werden, wobei Ausgangswerte (PA, A) zum ersten Ausführungszeitpunkt (SKB) beobachtet werden und wobei Aufträge (5) der ersten Auftragsart auf dem Automatisierungssystem (4) nicht ausgeführt werden, solange das Programmiergerät (PG) den Auftrag (5) blockiert.

7. Verfahren nach Anspruch 5 oder 6,
**dadurch gekennzeichnet,**
**dass** eine zweite Auftragsart ein Steuern von Operanden (6) beinhaltet, wobei zum Steuern einem Operanden (6) ein Steuerwert (7) zugewiesen wird, wobei Eingangswerte (PE, E) zum ersten Ausführungszeitpunkt (SKB) gesteuert werden, wobei Ausgangswerte (PA, A) zum zweiten Ausführungszeitpunkt (SKE) gesteuert werden und wobei Aufträge (5) der zweiten Auftragsart in jedem Zyklus ausgeführt werden, wenn die Aufträge (5) Operanden (6) enthalten.

8. Verfahren nach einem der vorhergehenden Ansprüche,
**dadurch gekennzeichnet,**
**dass** das Programm (2) nicht zyklisch wiederholt ausgeführt wird und die Ausführung der Aufträge (5) der ersten und/oder der zweiten Auftragsart durch das Programmiergerät (PG) angestoßen wird.

9. Verfahren nach einem der vorhergehenden Ansprüche,
**dadurch gekennzeichnet,**
**dass** das Automatisierungssystem (4) einen Zustandsautomaten realisiert, wobei ein Zustand in einem als Merker (M) ausgebildeten Operanden (6) im Speicher (11) gespeichert wird und wobei durch die einmalige Ausführung eines Auftrags (5) der zweiten Art der Merker (M) zum zweiten Ausführungszeitpunkt (SKE) gesteuert wird und **dadurch** der Automat in einen bestimmten Zustand versetzt wird.

10. Verfahren nach einem der vorhergehenden Ansprüche,
**dadurch gekennzeichnet,**
**dass** die Eingabemittel (3) zur Eingabe der Operanden (6), der Steuerwerte (7) und der Auftragsarten (8) in Felder einer Tabelle vorgesehen sind und dass die Aufträge (5) automatisch aus den Feldern der Tabelle generiert werden.

11. Verfahren nach einem der vorhergehenden Ansprüche,
**dadurch gekennzeichnet,**
**dass** die Operanden (6), die Steuerwerte (7) und die Auftragsarten (8) automatisch aus einer Hardware-Konfiguration oder einer Querverweisliste bestimmt werden und dass die Aufträge (5) automatisch aus den so bestimmten Daten (6, 7, 8) generiert werden.

12. Verfahren nach einem der vorhergehenden Ansprüche,
**dadurch gekennzeichnet,**
**dass** dem Anwender (9) eine Wahlmöglichkeit zwischen einer automatischen und einer manuellen Spezifikation des jeweiligen Ausführungszeitpunkts (SKB, SKE) und der jeweiligen Anwendungshäufigkeit der Aufträge (5) gegeben wird.

13. System zur Erstellung von Aufträgen in einem Automatisierungssystem, bei welchem System
- Aufträge (5) vorgesehen sind, welche durch Operanden (6), Steuerwerte (7) und den Operanden (6) zugeordnete Auftragsarten (8) definiert sind,
- eine Firmware (1) des Automatisierungssystems (4) zur Ausführung der Aufträge (5) vorgesehen ist,
- Eingabemittel (3) eines Programmiergeräts (PG) zur Parametrierung der Aufträge (5) durch einen Anwender (9) vorgesehen sind und
- das Programmiergerät (PG) zur automatischen Spezifizierung eines Ausführungszeitpunkts (SKB, SKE) und einer Anwendungshäufigkeit der Aufträge (5) in Abhängigkeit von Operand (6) und Auftragsart (8) und zur Zuordnung des Ausführungszeitpunkts (SKB, SKE) und der Anwendungshäufigkeit zu den Aufträgen (5) vorgesehen ist.

14. System nach Anspruch 13,
**dadurch gekennzeichnet,**
**dass** es zur Ausführung der Aufträge (5) vorgesehen ist, wobei
- die Firmware (1) des Automatisierungssystems (4) zur zyklisch wiederholten Ausführung eines Programms (2) vorgesehen ist,
- das Programmiergerät (PG) zur Weiterleitung der Aufträge (5) an das Automatisierungssystem (4) vorgesehen ist und
- die Firmware (1) zur Ausführung der Aufträge (5) zum dem jeweiligen Auftrag (5) zugeordneten Ausführungszeitpunkt (SKB, SKE) vorgesehen ist, wobei eine Beendigung der zyklischen Ausführung des Programms (2) nicht vorgesehen ist.

15. System nach Anspruch 13 oder 14,
**dadurch gekennzeichnet,**
**dass** das Programm (2) mindestens einen Organisationsbaustein (OB1) und Systembausteine (PAE, PAA) enthält, wobei der Organisationsbaustein (OB1) zur Ausführung von Operationen, die Operanden (6) miteinander verknüpfen, vorgesehen ist, wobei ein erster Systembaustein (PAE) zum Abbilden einer Peripherie (10) auf Eingangswerte (PE) in einem Speicher (11) und ein zweiter Systembaustein (PAA) zum Abbilden von Ausgangswerten (PA) aus dem Speicher (11) auf die Peripherie (10) vorgesehen ist.

16. System nach einem der Ansprüche 13 bis 15,
**dadurch gekennzeichnet,**
**dass** die Operanden (6) als Eingangswerte (PE, E) und Ausgangswerte (PA, A) ausgebildet sind, wobei das Programm (2) zum Zugriff auf die Eingangswerte (PE, E) und zu Erzeugung von Ausgangswerten (PA, A) durch Verknüpfung der Eingangswerte (PE, E) vorgesehen ist.

17. System nach einem der Ansprüche 13 bis 16,
**dadurch gekennzeichnet,**
**dass** ein erster Ausführungszeitpunkt (SKB) der Aufträge (5) zwischen der Ausführung des ersten Systembausteins (PAE) und der Ausführung des Organisationsbausteins (OB1) liegt und dass ein zweiter Ausführungszeitpunkt (SKE) der Aufträge (5) zwischen der Ausführung des Organisationsbausteins (OB1) und der Ausführung des zweiten Systembausteins (PAA) liegt.

18. System nach Anspruch 17,
**dadurch gekennzeichnet,**
**dass** eine erste Auftragsart ein Beobachten von Operanden (6) beinhaltet, wobei Anzeigemittel (12) des Programmiergeräts (PG) zur Anzeige von beobachteten Werten (13) der Operanden (6) vorgesehen sind, wobei eine Beobachtung der Eingangswerte (PE, E) zum zweiten Ausführungszeitpunkt (SKE) und eine Beobachtung der Ausgangswerte (PA, A) zum ersten Ausführungszeitpunkt (SKB) vorgesehen ist und wobei das Programmiergerät (PG) zur Blockierung der Ausführung von Aufträgen (5) der ersten Auftragsart auf dem Automatisierungssystem (4) vorgesehen ist.

19. System nach Anspruch 17 oder 18,
**dadurch gekennzeichnet,**
**dass** eine zweite Auftragsart ein Steuern von Operanden (6) beinhaltet, wobei ein Steuerwert (7) zur Zuweisung an einen Operanden (6) vorgesehen ist, wobei ein Steuern der Eingangswerte (PE, E) zum ersten Ausführungszeitpunkt (SKB) und ein Steuern der Ausgangswerte (PA, A) zum zweiten Ausführungszeitpunkt (SKE) vorgesehen ist und wobei eine Ausführung der Aufträge (5) der zweiten Auftragsart, welche Operanden (6) enthalten, in jedem Zyklus vorgesehen ist.

20. System nach einem der Ansprüche 13 bis 19,
**dadurch gekennzeichnet,**
**dass** bei einer nicht zyklisch wiederholten Ausführung des Programms (2) das Programmiergerät (PG) zur Initiierung der Ausführung der Aufträge (5) der ersten und/oder der zweiten Auftragsart vorgesehen ist.

21. System nach einem der Ansprüche 13 bis 20,
**dadurch gekennzeichnet,**
**dass** das Automatisierungssystem (4) einen Zustandsautomaten realisiert, wobei ein als Merker (M) ausgebildeter Operand (6) zur Speicherung eines Zustands im Speicher (11) vorgesehen ist und wobei ein einmalig ausgeführter Auftrag (5) der zweiten Art zur Steuerung des Merkers (M) zum zweiten Ausführungszeitpunkts (SKE) und somit zur Versetzung des Automaten in einen bestimmten Zustand vorgesehen ist.

22. System nach einem der Ansprüche 13 bis 21,
**dadurch gekennzeichnet,**
**dass** die Eingabemittel (3) zur Eingabe der Operanden (6), der Steuerwerte (7) und der Auftragsarten (8) in Felder einer Tabelle vorgesehen sind und dass das System zur automatischen Generierung der Aufträge (5) aus den Feldern der Tabelle vorgesehen ist.

23. System nach einem der Ansprüche 13 bis 22,
**dadurch gekennzeichnet,**
**dass** das Programmiergerät (PG) zur automatischen Bestimmung der Operanden (6), der Steuerwerte (7) und der Auftragsarten (8) aus einer Hardware-Konfiguration oder einer Querverweisliste und zur automatischen Generierung der Aufträge (5) aus den so bestimmten Daten (6, 7, 8) vorgesehen ist.

24. System nach einem der Ansprüche 13 bis 23,
**dadurch gekennzeichnet,**
**dass** eine Wahlmöglichkeit des Anwenders (9) zwischen einer automatischen und einer manuellen Spezifikation des jeweiligen Ausführungszeitpunkts (SKB, SKE) und der jeweiligen Anwendungshäufigkeit der Aufträge (5) vorgesehen ist.

## Claims

1. Method for creation of instructions in an automation system, by means of which method
- operands (6), control values (7) and types of instructions (8) associated with the operands (6) are defined in instructions (5), with the instructions (5) being provided for execution by a firmware (1) of the automation system (4),
- the instructions (5) can be parameterised by a user (9) by input means (3) of a programming device (PG) and
- the programming device (PG) automatically specifies an execution moment (SKB, SKE) and an application frequency of the instructions (5) according to the operands (6) and type of instruction (8), and assigns them to the instructions (5).

2. Method in accordance with claim 1,
**characterised in that**
the method is provided for execution of instructions (5), with
- a program (2) being designed for cyclical repetition by the firmware (1) of the automation system (4),
- the programming device (PG) passing the instructions (5) on to the automation system (4) and
- the instructions (5) being executed by the firmware (1) immediately the program (2) arrives at the execution moment (SKB, SKE) assigned to the particular instruction (5), with the cyclical execution of the program (2) not being ended.

3. Method in accordance with claim 2,
**characterised in that**
the program (2) contains at least one organisation module (OB1) and system modules (PAE, PAA), with the organisation module (OB1) being provided for execution of operations that link operands (6) to each other, with a first system module (PAE) being provided for depicting a periphery (10) on input values (PE) in a memory (11) and a second system module (PAA) being provided for depicting output values (PAA) from the memory (11) on the periphery (10).

4. Method in accordance with one of the preceding claims,
**characterised in that**
the operands (6) are designed as input values (PE, E) and output values (PA, A), with the program (2) accessing the input values (PE, E) and creating the output values (PA, A) by combining the input values (PE, E).

5. Method in accordance with one of the preceding claims,
**characterised in that**
a first execution moment (SKB) of the instructions (5) lies between the execution of the first system module (PAE) and the execution of the organisation module (OB1), and a second execution moment (SKE) of the instructions (5) lies between the execution of the organisation module (OB1) and the execution of the second system module (PAA).

6. Method in accordance with claim 5,
**characterised in that**
a first type of instruction contains an observation of operands (6), with observed values (13) of operands (6) being displayed to the user (9) by means of a display means (12) of the programming device (PG), with input values (PE, E) being observed at the second execution moment (SKE), with output values (PA, A) being observed at the first execution moment (SKB) and instructions (5) of the first type of instruction not being executed on the automation system (4) as long as the programming device (PG) blocks the instruction (5).

7. Method in accordance with claim 5 or 6,
**characterised in that**
a second type of instruction contains a control of operands (6), with a control value (7) being assigned for controlling an operand (6), with input values (PE, E) being controlled at a first execution moment (SKB), with output values (PA, A) being controlled at the second execution moment (SKE) and instructions (5) of the second type of instruction being executed in each cycle if the instructions (5) contain operands (6).

8. Method in accordance with one of the preceding claims,
**characterised in that**
the program (2) is not cyclically executed and the execution of the instructions (5) of the first and/or second type of instruction is activated by the program device (PG).

9. Method in accordance with one of the preceding claims,
**characterised in that**
the automation system (4) realises an automatic state device, with a state being stored in an operand (6) formed as a marker (M) in the memory (11) and with the second type of marker (M) being controlled at the second execution moment (SKE) by the once-only execution of an instruction (5) and the automatic device being thus set to a specific state.

10. Method in accordance with one of the preceding claims,
**characterised in that**
the input means (3) to input operands (6), the control values (7) and the types of instruction (8) are provided in fields of a table and the instructions (5) are automatically generated from the fields of the table.

11. Method in accordance with one of the preceding claims,
**characterised in that**
the operands (6), the control values (7) and the types of instruction (8) are automatically determined from a hardware configuration or cross-reference list and the instructions (5) are automatically created from the data (6, 7, 8) determined in this way.

12. Method in accordance with one of the preceding claims,
**characterised in that**
the user (9) is given a facility of a choice between an automatic and manual specification of the particular execution moment (SKB, SKE) and the particular application frequency of instructions (5).

13. System for creation of instructions in an automation system, whereby with such systems
- instructions (5) are provided, by means of which operands (6), control values (7), and types of instruction (8) assigned to the operands (6) are defined,
- a firmware (1) of the automation system (4) is provided for execution of the instructions (5),
- input means (3) of a programming device (PG) are provided for parameterising the instructions (5) by a user (9) and
- the programming device (PG) is provided for the automatic specification of an execution moment (SKB, SKE) and an application frequency of the instructions (5) relative to an operand (6) and type of instruction (8) and for assignment of the execution moment (SKB, SKE) and application frequency to the instructions (5).

14. System in accordance with claim 13,
**characterised in that**
it is provided for execution of instructions (5), with
- the firmware (1) of the automation system (4) being provided for the cyclically-repeated execution of a program (2),
- the programming device (PG) being provided for passing on the instructions (5) to the automation system (4) and
- the firmware (1) being provided for execution of instructions (5) at the execution moment (SKB, SKE) assigned to the particular instruction (5), with an ending of the cyclical execution of the program (2) not being provided.

15. System in accordance with claim 13 or 14,
**characterised in that**
the program (2) contains at least one organisation module (OB1) and system modules (PAE, PAA), with the organisation module (OB1) being provided for the execution of operations that link operands (6) to each other, with a first system module (PAE) being provided for the depiction of a periphery (10) on input values (PE) in a memory (11) and a second system module (PAA) being provided for the depiction of output values (PA) from the memory (11) on the periphery (10).

16. System in accordance with one of claims 13 to 15,
**characterised in that**
the operands (6) are designed as input values (PE, E) and output values (PA, A), with the program (2) being provided for access to the input values (PE, E) and for creation of output values (PA, A) by combining the input values (PE, E).

17. System in accordance with one of claims 13 to 16,
**characterised in that**
a first execution moment (SKB) of instructions (5) lies between the execution of the first system module (PAE) and the execution of the organisation module (OB1) and that a second execution moment (SKE) of the instructions (5) lies between the execution of the organisation module (OB1) and the execution of the second system module (PAA).

18. System in accordance with claim 17
**characterised in that**
a first type of instruction contains an observation of operands (6), with a display means (12) of the programming device (PG) being provided for the display of observed values (13) of operands (6), with an observation of the input values (PE, E) at the second execution moment (SKE) and an observation of the output values (PA, A) at the first execution moment (SKB) being provided and the programming device (PG) being provided for blocking the execution on the automation system (4) of instructions (5) of the first type of instruction.

19. System in accordance with claim 17 or 18,
**characterised in that** a second type of instruction contains a control of operands (6), with a control value (7) being provided for assignment to an operand (6), with a control of the input values (PE, E) at the first execution moment (SKB) and a control of the output values (PA, A) at the second execution moment (SKE) being provided and with an execution of the instructions (5) of the second type of instruction, that contain operands (6), being provided in each cycle.

20. System in accordance with one of claims 13 to 19,
**characterised in that**
**that** where there is a non-cyclic repeated execution of the program (2) the programming device (PG) is provided for initiation of the execution of instructions (5) of the first and/or second type of instruction.

21. System in accordance with one of claims 13 to 20,
**characterised in that**
the automation system (4) realises an automatic state device, with an operand (6) formed as a marker (M) being provided for storage of a state in the memory (11) and with a once-only executed instruction (5) of the second type being provided for the control of the marker (M) at the second execution moment (SKE), and thus for placing the automatic device in a specific state.

22. System in accordance with one of claims 13 to 21,
**characterised in that**
the input means (3) for the input of the operands (6), the control values (7) and the types of instruction (8) are provided in fields of a table and the system is provided for automatic generation of instructions (5) from fields of the table.

23. System in accordance with one of claims 13 to 22,
**characterised in that**
the programming device (PG) is provided for automatic determination of the operands (6), the control values (7) and the types of instruction (8) from a hardware configuration or a cross-reference list, and for automatic generation of the instructions (5) from the data (6, 7, 8) determined in this way.

24. System in accordance with one of claims 13 to 23,
**characterised in that**
a facility of a choice between an automatic and manual specification of the particular execution moment (SKB, SKE) and the particular application frequency of the instructions (5) is provided for the user (9).

## Revendications

1. Procédé de création de tâches dans un système d'automatisation, procédé dans lequel
- dans des tâches (5), on définit des opérandes (6), des valeurs de commande (7) et des types de tâche (8) associés aux opérandes (6), les tâches (5) étant prévues pour une exécution par un microprogramme (1) du système d'automatisation (4),
- un utilisateur (9) peut paramétrer les tâches (5) à l'aide de moyens d'entrée (3) d'un appareil de programmation (PG), et
- l'appareil de programmation (PG) spécifie automatiquement à chaque fois un instant d'exécution (SKB, SKE) et une fréquence d'utilisation des tâches (5) en fonction de l'opérande (6) et du type de tâche (8) et il les associe aux tâches (5).

2. Procédé selon la revendication 1,
**caractérisé par le fait que** le procédé est prévu pour l'exécution des tâches (5),
- un programme (2) étant exécuté, répété de manière cyclique, par le microprogramme (1) du système d'automatisation (4),
- l'appareil de programmation (PG) retransmettant les tâches (5) au système d'automatisation (4), et
- les tâches (5) étant exécutées par le microprogramme (1) dès que le programme (2) arrive à l'instant d'exécution (SKB, SKE) associé à la tâche respective (5), l'exécution cyclique du programme (2) n'étant pas terminée.

3. Procédé selon la revendication 2,
**caractérisé par le fait que** le programme (2) contient au moins un module d'organisation (OB1) et des modules de système (PAE, PAA), le module d'organisation (OB1) étant prévu pour l'exécution d'opérations qui combinent entre eux des opérandes (6), un premier module de système (PAE) étant prévu pour la reproduction d'une périphérie (10) sur des valeurs d'entrée (PE) dans une mémoire (11) et un deuxième module de système (PAA) étant prévu pour la reproduction de valeurs de sortie (PA) de la mémoire (11) sur la périphérie (10).

4. Procédé selon l'une des revendications précédentes,
**caractérisé par le fait que** les opérandes (6) sont conçus comme des valeurs d'entrée (PE, E) et des valeurs de sortie (PA, A), le programme (2) accédant aux valeurs d'entrée (PE, E) et produisant les valeurs de sortie (PA, A) par combinaison des valeurs d'entrée (PE, E).

5. Procédé selon l'une des revendications précédentes,
**caractérisé par le fait qu'**un premier instant d'exécution (SKB) des tâches (5) se trouve entre l'exécution du premier module de système (PAE) et l'exécution du module d'organisation (OB1) et qu'un deuxième instant d'exécution (SKE) des tâches (5) se trouve entre l'exécution du module d'organisation (OB1) et l'exécution du deuxième module de système (PAA).

6. Procédé selon la revendication 5,
**caractérisé par le fait qu'**un premier type de tâche contient une observation d'opérandes (6), des valeurs observées (13) des opérandes (6) étant présentées à l'utilisateur (9) à l'aide de moyens d'affichage (12) de l'appareil de programmation (PG), des valeurs d'entrée (PE, E) étant observées au deuxième instant d'exécution (SKE), des valeurs de sortie (PA, A) étant observées au premier instant d'exécution (SKB) et des tâches (5) du premier type de tâche n'étant pas exécutées sur le système d'automatisation (4) tant que l'appareil de programmation (PG) bloque la tâche (5).

7. Procédé selon la revendication 5 ou 6,
**caractérisé par le fait qu'**un deuxième type de tâche contient une commande d'opérandes (6), une valeur de commande (7) étant attribuée pour la commande d'un opérande (6), des valeurs d'entrée (PE, E) étant commandées au premier instant d'exécution (SKB), des valeurs de sortie (PA, A) étant commandées au deuxième instant d'exécution (SKE) et des tâches (5) du deuxième type de tâche étant exécutées dans chaque cycle lorsque les tâches (5) contiennent des opérandes (6).

8. Procédé selon l'une des revendications précédentes,
**caractérisé par le fait que** le programme (2) n'est pas exécuté selon une répétition cyclique et que l'exécution des tâches (5) du premier et/ou du deuxième type de tâche est déclenchée par l'appareil de programmation (PG).

9. Procédé selon l'une des revendications précédentes,
**caractérisé par le fait que** le système d'automatisation (4) réalise un automate d'états, un état dans un opérande (6) conçu comme indicateur (M) étant mémorisé dans la mémoire (11) et, par l'exécution unique d'une tâche (5) du deuxième type, l'indicateur (M) étant commandé au deuxième instant d'exécution (SKE) et l'automate étant ainsi mis dans un certain état.

10. Procédé selon l'une des revendications précédentes,
**caractérisé par le fait que** les moyens d'entrée (3) sont prévus pour l'entrée des opérandes (6), des valeurs de commande (7) et des types de tâche (8) dans des champs d'un tableau et que les tâches (5) sont produites automatiquement à partir des champs du tableau.

11. Procédé selon l'une des revendications précédentes,
**caractérisé par le fait que** les opérandes (6), les valeurs de commande (7) et les types de tâche (8) sont déterminés automatiquement à partir d'une configuration matérielle ou d'une liste de correspondances et que les tâches (5) sont produites automatiquement à partir des données (6, 7, 8) ainsi déterminées.

12. Procédé selon l'une des revendications précédentes,
**caractérisé par le fait que** l'utilisateur (9) a la possibilité de choisir entre une spécification automatique et une spécification manuelle de l'instant d'exécution respectif (SKB, SKE) et de la fréquence d'utilisation respective des tâches (5).

13. Système de création de tâches dans un système d'automatisation, système dans lequel
- il est prévu des tâches (5) qui sont définies par des opérandes (6), par des valeurs de commande (7) et par des types de tâche (8) associés aux opérandes (6),
- il est prévu un microprogramme (1) du système d'automatisation (4) pour l'exécution des tâches (5),
- il est prévu des moyens d'entrée (3) d'un appareil de programmation (PG) pour le paramétrage des tâches (5) par un utilisateur (9), et
- l'appareil de programmation (PG) est prévu pour la spécification automatique d'un instant d'exécution (SKB, SKE) et d'une fréquence d'utilisation des tâches (5) en fonction de l'opérande (6) et du type de tâche (8) et pour l'association de l'instant d'exécution (SKB, SKE) et de la fréquence d'utilisation aux tâches (5).

14. Système selon la revendication 13,
**caractérisé par le fait qu'**il est prévu pour l'exécution des tâches (5),
- le microprogramme (1) du système d'automatisation (4) étant prévu pour l'exécution répétée cycliquement d'un programme (2),
- l'appareil de programmation (PG) étant prévu pour la retransmission des tâches (5) au système d'automatisation (4), et
- le microprogramme (1) étant prévu pour l'exécution des tâches (5) à l'instant d'exécution (SKB, SKE) associé à la tâche respective (5), une fin de l'exécution cyclique du programme (2) n'étant pas prévue.

15. Système selon la revendication 13 ou 14,
**caractérisé par le fait que** le programme (2) contient au moins un module d'organisation (OB1) et des modules de système (PAE, PAA), le module d'organisation (OB1) étant prévu pour l'exécution d'opérations qui combinent entre eux des opérandes (6), un premier module de système (PAE) étant prévu pour la reproduction d'une périphérie (10) sur des valeurs d'entrée (PE) dans une mémoire (11) et un deuxième module de système (PAA) étant prévu pour la reproduction de valeurs de sortie (PA) de la mémoire (11) sur la périphérie (10).

16. Système selon l'une des revendications 13 à 15,
**caractérisé par le fait que** les opérandes (6) sont conçus comme des valeurs d'entrée (PE, E) et des valeurs de sortie (PA, A), le programme (2) étant prévu pour accéder aux valeurs d'entrée (PE, E) et pour produire des valeurs de sortie (PA, A) par combinaison des valeurs d'entrée (PE, E).

17. Système selon l'une des revendications 13 à 16,
**caractérisé par le fait qu'**un premier instant d'exécution (SKB) des tâches (5) se trouve entre l'exécution du premier module de système (PAE) et l'exécution du module d'organisation (OB1) et qu'un deuxième instant d'exécution (SKE) des tâches (5) se trouve entre l'exécution du module d'organisation (OB1) et l'exécution du deuxième module de système (PAA).

18. Système selon la revendication 17,
**caractérisé par le fait qu'**un premier type de tâche contient une observation d'opérandes (6), des moyens d'affichage (12) de l'appareil de programmation (PG) étant prévus pour l'affichage de valeurs observées (13) des opérandes (6), une observation des valeurs d'entrée (PE, E) étant prévue au deuxième instant d'exécution (SKE), une observation des valeurs de sortie (PA, A) étant prévue au premier instant d'exécution (SKB) et l'appareil de programmation (PG) étant prévu pour le blocage de l'exécution de tâches (5) du premier type de tâche sur le système d'automatisation (4).

19. Système selon la revendication 17 ou 18,
**caractérisé par le fait qu'**un deuxième type de tâche contient une commande d'opérandes (6), une valeur de commande (7) étant prévue pour l'attribution à un opérande (6), une commande des valeurs d'entrée (PE, E) étant prévue au premier instant d'exécution (SKB), une commande des valeurs de sortie (PA, A) étant prévue au deuxième instant d'exécution (SKE) et une exécution des tâches (5) du deuxième type de tâche qui contiennent des opérandes (6) étant prévue dans chaque cycle.

20. Système selon l'une des revendications 13 à 19,
**caractérisé par le fait que**, dans le cas d'une exécution non répétée cycliquement du programme (2), l'appareil de programmation (PG) est prévu pour le déclenchement de l'exécution des tâches (5) du premier et/ou du deuxième type de tâche.

21. Système selon l'une des revendications 13 à 20,
**caractérisé par le fait que** le système d'automatisation (4) réalise un automate d'états, un opérande (6) conçu comme indicateur (M) étant prévu pour la mémorisation d'un état dans la mémoire (11) et une exécution unique d'une tâche (5) du deuxième type étant prévue pour commander l'indicateur (M) au deuxième instant d'exécution (SKE) et donc pour mettre l'automate dans un certain état.

22. Système selon l'une des revendications 13 à 21,
**caractérisé par le fait que** les moyens d'entrée (3) sont prévus pour l'entrée des opérandes (6), des valeurs de commande (7) et des types de tâche (8) dans des champs d'un tableau et que le système est prévu pour la production automatique des tâches (5) à partir des champs du tableau.

23. Système selon l'une des revendications 13 à 22,
**caractérisé par le fait que** l'appareil de programmation (PG) est prévu pour la détermination automatique des opérandes (6), des valeurs de commande (7) et des types de tâche (8) à partir d'une configuration matérielle ou d'une liste de correspondances et pour la production automatique des tâches (5) à partir des données (6, 7, 8) ainsi déterminées.

24. Système selon l'une des revendications 13 à 23,
**caractérisé par le fait qu'**il est prévu un choix possible de l'utilisateur (9) entre une spécification automatique et une spécification manuelle de l'instant d'exécution respectif (SKB, SKE) et de la fréquence d'utilisation respective des tâches (5).
